# FASCICULE DE BREVET EUROPEEN

(11) **EP 0 819 310 B1**
(45) Date de publication et mention de la délivrance du brevet: **29.12.1999**
(21) Numéro de dépôt: 96904901.4
(22) Date de dépôt: 23.02.1996
(51) Int. Cl.: G21C 19/307

(54) **DISPOSITIF DE RETENUE DES PARTICULES FERROMAGNETIQUES CONTENUES DANS UN LIQUIDE CIRCULANT DANS UNE TUYAUTERIE**
VORRICHTUNG ZUR RÜCKHALTUNG VON FERROMAGNETISCHEN TEILCHEN IN EINER FLÜSSIGKEIT, DIE IN EINER LEITUNG FLIESST
DEVICE FOR RETAINING FERROMAGNETIC ARTICLES CONTAINED IN A LIQUID CIRCULATING IN A PIPE NETWORK

(30) Priorité: 24.02.1995 FR 9502159
(43) Date de publication de la demande: 21.01.1998
(73) Titulaire: ELECTRICITE DE FRANCE Service National, 75008 Paris (FR); Eurofiltec, 94563 Rungis Cédex (FR)
(72) Inventeur: LEAUSTIC, André, F-92210 Saint-Cloud (FR); CHASTRES, Michel, F-78960 Voisins-les-Bretonneux (FR); JOUANY, Christian, F-91450 Etiolles (FR)
(74) Mandataire: Des Termes, Monique
(86) Numéro de dépôt international: FR9600291
(87) Numéro de publication internationale: WO9626524

(56) Documents cités:
- JP-A- 61 271 010
- US-A- 4 363 729
- US-A- 4 946 589
- PATENT ABSTRACTS OF JAPAN vol. 011, no. 371 (C-462), 3 Décembre 1987 & JP,A,62 144722 (NITSUSHIYOO KIKO:KK), 27 Juin 1987

## Description

### Art antérieur

La présente invention se rapporte à un dispositif de retenue des particules ferromagnétiques contenues dans un liquide circulant dans une tuyauterie, permettant de décharger les particules retenues, voire les transférer sur un élément filtrant, sans ouverture du dispositif et sans contact avec le liquide chargé de particules. Elle concerne en particulier les circuits purge/évent des circuits primaires de centrales nucléaires à réacteur à eau pressurisée, par exemple pour piéger indirectement des particules amagnétiques de cobalt 58-60 provenant de portées "stellitées", en arguant du fait que ces particules de cobalt sont elles-mêmes piégées dans des amas de particules ferromagnétiques.

La filtration consiste à faire passer un liquide chargé de particules à travers une surface filtrante pour retenir mécaniquement sur cette dernière les particules qui, du fait de leur taille, ne sont pas capables de traverser la surface filtrante. Le principal inconvénient de la filtration consiste dans le colmatage progressif de la surface filtrante par les particules, d'où des pertes de charge et un risque de bouchage.

Pour retenir uniquement des particules ferromagnétiques contenues dans un liquide en circulation, il a également déjà été proposé de placer dans le liquide en circulation un corps magnétique, notamment un aimant permanent, qui attire et retient ainsi les particules ferromagnétiques. L'inconvénient de ces dispositifs connus consiste dans le fait que le corps magnétique est un contact direct avec le liquide ainsi qu'avec les particules, ce qui peut poser des problèmes dus à la nature du liquide (par exemple liquides agressifs, solvants, etc.) et à la nature des particules (par exemple particules radioactives) . En effet, pour débarrasser le corps magnétique des particules retenues, il est nécessaire d'accéder au corps magnétique, donc également au liquide et aux particules retenues sur le corps.

### Résumé de l'invention

la présente invention propose un dispositif de retenue de particules ferromagnétiques contenues dans un liquide circulant dans une tuyauterie, ce dispositif remédiant aux inconvénients des dispositifs de filtration (pertes de charge, risques de bouchage) et aux inconvénients des dispositifs de retenue magnétique connus (problèmes dus au contact avec le liquide et avec les particules retenues pendant le déchargement de ces dernières).

Le dispositif comprend une cuve munie :
- de moyens pour son raccordement à la tuyauterie ;
- de moyens de décharge des particules à son extrémité inférieure ;
- de moyens de canalisation pour définir dans la cuve, pour le liquide, un trajet d'écoulement sensiblement vertical débouchant vers le bas au-dessus des moyens de décharge ;
- de moyens d'enveloppe amagnétiques faisant saillie dans ledit trajet d'écoulement comprenant une gaine s'étendant depuis le haut de la cuve dans le trajet d'écoulement et fermée à son extrémité inférieure ; et
- de moyens générateurs de champ magnétique comprenant un aimant permanent en forme de barreau monté coulissant dans ladite gaine et des moyens de manoeuvre pour, à volonté, engager l'aimant dans la gaine et le retirer de cette dernière pour produire à l'intérieur desdits moyens d'enveloppe un champ magnétique agissant dans ledit trajet d'écoulement et pour, à volonté, supprimer ledit champ magnétique à l'intérieur des moyens d'enveloppe.

Le dispositif conforme à l'invention est en outre caractérisé par les caractéristiques de la revendication 1.

Ainsi, tant que l'aimant est engagé dans la gaine, il retient contre la gaine les particules ferromagnétiques contenues dans le liquide traversant le trajet d'écoulement défini par les moyens de canalisation. Cet effet d'attraction magnétique des particules est supprimé dès que l'aimant permanent est retiré vers le haut de la gaine, de sorte que les particules ferromagnétiques préalablement retenues contre la gaine par l'aimant permanent se trouvent libérées et peuvent ainsi parvenir vers les moyens de décharge prévus à l'extrémité inférieure de la cuve, en dessous de la gaine, moyens par lesquels ils sont extraits hors de la cuve.

Les moyens générateurs de champ magnétique peuvent comprendre au moins un électro-aimant disposé à poste fixe dans lesdits moyens d'enveloppe, et des moyens interrupteurs pour couper à volonté l'alimentation en courant électrique de l'électro-aimant.

De préférence, les moyens de canalisation définissent un trajet d'écoulement de section circulaire et les moyens d'enveloppe sont disposés concentriquement dans ce trajet d'écoulement.

La cuve diminue de section de préférence vers le bas en direction des moyens de décharge, à la manière d'un entonnoir.

De ce fait, les particules retenues, lorsqu'elles sont libérées, se trouvent concentrées vers les moyens de décharge lors de leur descente vers ces dernières.

La cuve peut avantageusement comprendre une vanne commandant la communication de l'espace intérieur de la cuve avec les moyens de décharge.

la cuve se complète avantageusement d'un orifice d'entrée pour recevoir un flux sous pression afin de forcer l'évacuation des particules.

Liste des figures

En se référant aux dessins schématiques annexés, on va décrire ci-après plus en détail un mode de réalisation illustratif et non limitatif d'un dispositif de retenue magnétique conforme à l'invention ;
sur les dessins :
- la figure 1 représente le dispositif de retenue conforme à l'invention pendant la circulation du liquide chargé de particules ferromagnétiques ;
- la figure 2 représente ce même dispositif lors de la libération des particules ferromagnétiques ;
- la figure 3 représente ce même dispositif pendant le transfert des particules dans une cartouche filtrante.

### Description détaillée de l'invention

Le dispositif de retenue de particules ferromagnétiques tel qu'illustré par les dessins comprend une cuve 1 de forme générale cylindrique, disposée en position verticale. La cuve comporte, en partie haute, un raccord d'entrée 2 et un raccord de sortie 3 permettant de raccorder la cuve 1 à une tuyauterie non représentée, traversée par un liquide chargé de particules ferromagnétiques. A l'intérieur de la cuve 1 sont disposés des moyens de guidage pour établir pour le liquide un trajet d'écoulement bien défini dans la cuve 1, entre le raccord d'entrée 2 et le raccord de sortie 3, et notamment un élément de guidage 4 cylindrique vertical dans lequel s'établit un écoulement ascendant.

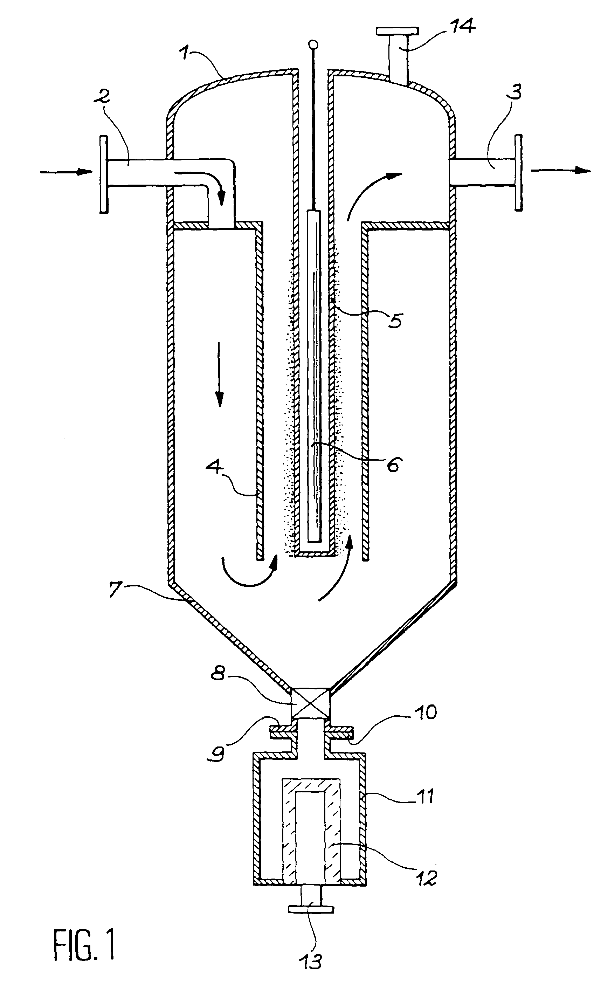

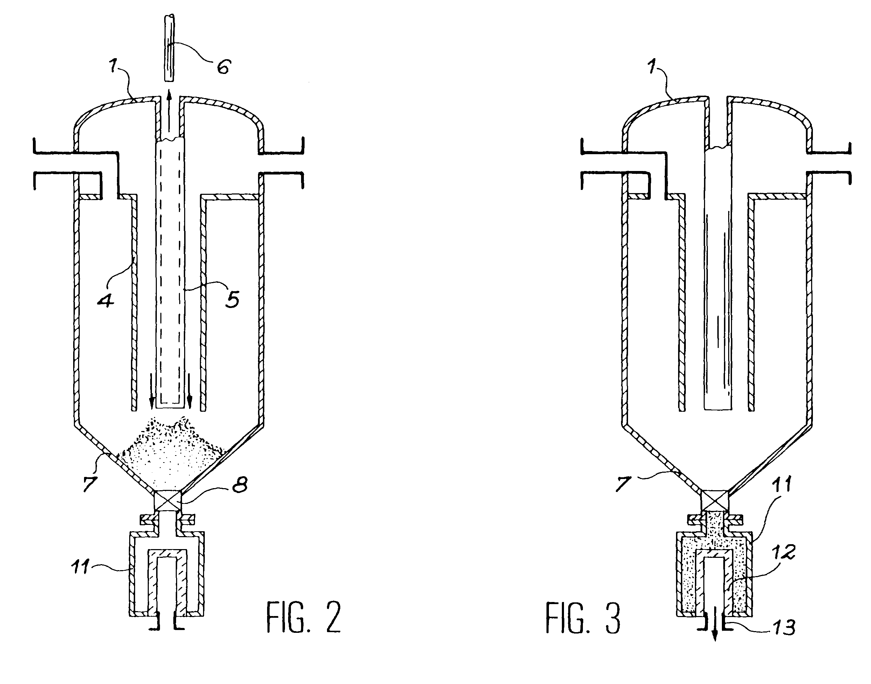

Une gaine 5 cylindrique en un matériau amagnétique, fermée à son extrémité inférieure, s'étend à la manière d'un doigt de gant depuis le dessus de la cuve 1 concentriquement à l'élément 4 à travers ce dernier, jusqu'à l'extrémité inférieure de ce dernier, de sorte que l'élément 4 et la gaine 5 délimitent entre eux un trajet d'écoulement de section annulaire. Un aimant permanent 6 en forme de barreau ayant une longueur sensiblement égale à la longueur de l'élément 4 est monté mobile à l'intérieur de la gaine 5 de manière à pouvoir être amené par une commande manuelle ou de préférence une commande motorisée, non représentée, d'une position basse selon la figure 1, dans laquelle il est engagé à fond dans la gaine 5, à une position haute selon la figure 2, dans laquelle il est retiré vers le haut de la gaine 5.

A sa partie inférieure, en dessous de l'élément de guidage 4, la cuve 1 par ailleurs cylindrique comporte une partie 7 tronconique se rétrécissant à la manière d'un entonnoir pour déboucher par une vanne 8 dans un raccord de sortie 9 auquel est relié le raccord d'entrée 10, d'une cartouche filtrante 11 renfermant une garniture filtrante 12 et comportant, à l'opposé de son raccord d'entrée 10, un raccord de sortie 13 pour l'évacuation du liquide ayant traversé la garniture filtrante 12.

Dans la position illustrée sur la figure 1, la vanne 8 de la cuve 1 est fermée et le liquide chargé de particules ferromagnétiques, circulant dans la tuyauterie à laquelle la cuve 1 est raccordée par ses raccords 2 et 3, traverse la cuve dans le sens indiqué par les flèches. Dans le trajet d'écoulement défini par l'élément de guidage 4 et la gaine 5, les particules ferromagnétiques contenues dans le liquide sont attirées contre la gaine 5 par l'aimant permanent 6 en forme de barreau se trouvant en position basse dans la gaine 5. Le liquide entrant par le raccord 2 quitte ainsi la cuve 1 par le raccord 3 en étant débarrassé des particules ferromagnétiques.

Dans la position suivant la figure 2, la circulation, à travers la cuve 1, du liquide chargé de particules est interrompue et l'aimant 6 en forme de barreau est retiré vers le haut de la gaine 5. De ce fait, toutes les particules ferromagnétiques préalablement accumulées sur la gaine 5 sous l'effet de l'aimant 6 se trouvent libérées et descendent par gravité dans la cuve 1, de manière à s'accumuler dans la partie 7 en forme d'entonnoir, au-dessus de la vanne 8 qui reste fermée.

Dans la position selon la figure 3, la circulation, à travers la cuve 1, du liquide chargé de particules ferromagnétiques est toujours interrompue et l'aimant 6 en forme de barreau est toujours retiré vers le haut de la gaine 5. Par ouverture de la vanne 8, on décharge alors le contenu de la cuve 1 (liquide et particules ferromagnétiques accumulées dans la partie inférieure 7 de la cuve 1) dans la cartouche 11 dont le raccord 13 laisse s'échapper le liquide après passage à travers la garniture filtrante 12 qui retient les particules ferromagnétiques.

Il y a lieu de noter que le transfert des particules ferromagnétiques (avec le liquide contenu dans la cuve 1) dans la cartouche filtrante, au lieu de se faire par gravité, peut être avantageusement assisté par application d'une pression à l'intérieur de la cuve 1, au-dessus du liquide. A cet effet, un orifice d'entrée 14 placé dans la partie supérieure de la cuve 1 permet de mettre celle-ci sous pression et de forcer ainsi à l'évacuation des particules.

Après ce transfert, il suffit de refermer la vanne 8 pour remettre en fonctionnement le dispositif de retenue magnétique par rétablissement de la circulation du liquide chargé de particules à travers la cuve 1 et abaissement de l'aimant 6 en forme de barreau dans la gaine 5. Selon les cas, la cartouche filtrante 1 peut être remplacée ou être utilisée pour d'autres cycles de décharge de particules ferromagnétiques.

Le dispositif conforme à l'invention peut trouver des applications particulièrement intéressantes pour débarrasser des liquides de particules ferromagnétiques radioactives, par exemple dans des circuits de centrales nucléaires en amont de pompes ou sur des systèmes d'écoulement par gravité, en particulier sur les circuits purge/évent des circuits primaires. D'autres applications avantageuses concernent le traitement de liquides corrosifs ou dangereux tels que des solvants. Toutefois, l'invention peut également être utilisée sur des liquides et des particules ferromagnétiques ne posant pas de problèmes particuliers de par leur nature, le dispositif permettant dans tous les cas une retenue des particules ferromagnétiques sans pertes de charge et sans risque de bouchage.

Il y lieu de noter que le mode de réalisation représenté et décrit n'a été donné qu'à titre d'exemple illustratif et non limitatif et que de nombreuses variantes et modifications sont possibles dans le cadre de l'invention. Il en est ainsi pour la cuve du dispositif et pour les moyens de canalisation (élément de guidage 4) qui pourraient avoir des formes autres que cylindriques. Les moyens de décharge des particules pourraient également ne pas comprendre de cartouche filtrante qui peut, selon les cas, être une cartouche à jeter ou également un filtre d'un autre type.

## Revendications

1. Dispositif de retenue des particules ferromagnétiques contenues dans un liquide circulant dans une tuyauterie, comprenant une cuve (1) munie :
- de moyens (2, 3) pour son raccordement à la tuyauterie ;
- de moyens (8, 9) de décharge des particules à son extrémité inférieure ;
- de moyens de canalisations (4) pour définir dans la cuve, pour le liquide, un trajet d'écoulement sensiblement vertical pour le liquide, débouchant vers le bas au-dessus des moyens de décharge ;
- de moyens d'enveloppe (5) amagnétiques faisant saillie dans ledit trajet d'écoulement comprenant une gaine (5) s'étendant depuis le haut de la cuve (1) dans ledit trajet d'écoulement et fermée à son extrémité inférieure ; et
- de moyens générateurs de champ magnétique (6) comprenant un aimant permanent (6) en forme de barreau monté coulissant dans ladite gaine et des moyens de manoeuvre pour, à volonté, engager l'aimant dans la gaine et le retirer de cette dernière, pour produire, à l'intérieur desdits moyens d'enveloppe, un champ magnétique agissant dans ledit trajet d'écoulement et pour, à volonté, supprimer ledit champ magnétique à l'intérieur des moyens d'enveloppe,
caractérisé par le fait que les moyens de décharge comprennent un filtre (11), constitué par une cartouche filtrante (11) à jeter, avec des moyens (13) pour permettre l'écoulement du liquide ayant traversé le filtre pour entraîner les particules ferromagnétiques dans cette dernière.

2. Dispositif suivant la revendication 1, caractérisé par le fait que lesdits moyens générateurs de champ comprennent au moins un électro-aimant disposé à poste fixe dans lesdits moyens d'enveloppe, et des moyens interrupteurs pour couper l'alimentation électrique de l'électro-aimant.

3. Dispositif suivant l'une quelconque des revendications précédentes, caractérisé par le fait que les moyens de canalisation (4) définissent un trajet d'écoulement de section circulaire et que les moyens d'enveloppe (5) sont disposés concentriquement dans le trajet d'écoulement.

4. Dispositif suivant l'une quelconque des revendications précédentes, caractérisé par le fait que la cuve (1) diminue de section vers le bas en direction des moyens de décharge à la manière d'un entonnoir.

5. Dispositif suivant l'une quelconque des revendications précédentes, caractérisé par le fait que la cuve (1) comprend une vanne (8) commandant la communication de l'espace intérieur de la cuve avec les moyens de décharge (8, 9).

6. Dispositif selon la revendication 1, caractérisé en ce que la cuve (1) comprend un orifice d'entrée (14) destine à recevoir un flux d'air sous pression.

## Patentansprüche

1. Vorrichtung zur Rückhaltung der ferromagnetischen Teilchen einer in einer Leitung fließenden Flüssigkeit, einen Behälter umfassend, ausgestattet mit:
- Einrichtungen (2, 3) für seinen Anschluß an die Leitung;
- Einrichtungen (8, 9) zum Entleeren der Teilchen an seinem unteren Ende,
- Kanalisierungseinrichtungen (4), um in dem Behälter für die Flüssigkeit einen im wesentlichen vertikalen Strömungsweg abzugrenzen, der nach unten mündet, über den Entleerungseinrichtungen;
- amagnetische Hülleinrichtungen (5), die in den genannten Strömungsweg hineinragen und eine Hülse (5) umfassen, die sich von der Oberseite des Behälters (1) in diesem Strömungsweg erstreckt und an ihrem unteren Ende geschlossen ist; und
- Magnetfeld-Erzeugungseinrichtungen (6), einen stabförmigen, in der genannte Hülse angebrachten Permanentmagneten (6) und Betätigungseinrichtungen umfassend, um den Magneten nach Bedarf in die Hülse einzuführen und aus dieser letzteren zurückzuziehen, um im Innern der genannten Hülleinrichtungen ein Magnetfeld zu erzeugen, das in dem genannten Strömungsweg wirkt, und um das genannte Magnetfeld im Innern der Hülleinrichtungen nach Bedarf aufzuheben,
**dadurch gekennzeichnet,** daß die Entleerungseinrichtungen einen Filter (11) umfassen, gebildet durch eine Wegwerf-Filterpatrone (11) mit Einrichtungen (13), um die Entleerung der Flüssigkeit zu ermöglichen, die den Filter durchquert hat, um die ferromagnetischen Teilchen in diesen letzteren zu schwemmen.

2. Vorrichtung nach Anspruch 1, dadurch gekennzeichnet, daß die genannten Felderzeugungseinrichtungen wenigstens einen in den genannten Hülleinrichtungen fest angebrachten Elektromagneten umfassen, und Schalteinrichtungen, um die elektrische Versorgung des Elektromagneten zu unterbrechen.

3. Vorrichtung nach einem der vorangehenden Ansprüche, dadurch gekennzeichnet, daß die Kanalisierungseinrichtungen (4) einen Strömungsweg mit kreisförmigem Querschnitt abgrenzen und die Hülleinrichtungen (5) konzentrisch in dem Strömungsweg angeordnet sind.

4. Vorrichtung nach einem der vorangehenden Ansprüche, dadurch gekennzeichnet, daß der Querschnitt des Behälters (1) sich nach unten in Richtung Entleerungseinrichtungen trichterförmig verjüngt.

5. Vorrichtung nach einem der vorangehenden Ansprüche, dadurch gekennzeichnet, daß der Behälter (1) ein Ventil (8) umfaßt, daß die Verbindung des Innenraums des Behälters mit den Entleerungseinrichtungen (8, 9) steuert.

6. Vorrichtung nach Anspruch 1, dadurch gekennzeichnet, daß der Behälter (1) eine Eingangsöffnung (14) zur Einspeisung eines Druckluftstroms umfaßt.

## Claims

1. Retention device for ferromagnetic particles contained in a liquid circulating in piping, comprising a tank fitted with:
- means (2, 3) for its connection to the piping;
- means (8, 9) for unloading particles at its lower end;
- channelling means (4) to determine a flow pathway for the liquid inside the tank which are substantially vertical for the liquid and lead downwards to above the unloading means;
- anti-magnetic casing means (5) projecting into said pathway and comprising a shaft (5) extending from the top of tank (1) into said flow pathway and closed at its lower end; and
- means of generating a magnetic field (6), comprising a permanent magnet (6) of bar shape mounted so that it can slide inside said shaft, and handling means for the insertion of the magnet into the shaft in order to produce, within said casing means, a magnetic field which acts on said flow pathway and in order to cancel said magnetic field when required inside the casing means,
characterized in that the discharge means comprise a filter (11), constituted by a filter cartridge (11) to be thrown away, having means (13) in order to permit the outflow of liquid which has traversed the filter in order to entrain ferromagnetic particles into the latter.

2. Device in accordance with claim 1, characterized in that said means of generating a field comprise at least one electromagnet permanently fixed in said casing means, and switching means to cut off the electric supply to the electromagnet.

3. Device in accordance with either of the above claims, characterized in that channelling means (4) determine a flow pathway of circular section and in that casing means (5) are placed concentric fashion in the flow pathway.

4. Device in accordance with any of the above claims, characterized in that the cross-section of tank (1) decreases in funnel fashion as it extends downwards towards the unloading means.

5. Device in accordance with any of the above claims, characterized in that tank (1) comprises a gate (8) controlling the passage between the inner space of the tank and unloading means (8, 9).

6. Device in accordance with claim 1, characterized in that tank (1) comprises an inlet (14) intended to take in a flow of air under pressure.
